# EUROPEAN PATENT SPECIFICATION

(11) **EP 0 624 332 B1**
(45) Date of publication and mention of the grant of the patent: **04.03.1998**
(21) Application number: 94201266.7
(22) Date of filing: 06.05.1994
(51) Int. Cl.: A47C 27/20, A47C 27/06

(54) **Elastic springy element and springy supporting element provided with such elastic springy elements.**
Elastisches Federelement und elastisches Stützelement mit solchen Federelementen
Elément de ressort élastique et élément de support élastique pourvu de tels éléments de ressort

(30) Priority: 14.05.1993 BE 9300501
(43) Date of publication of application: 17.11.1994
(73) Proprietor: IMHOLD, naamloze vennootschap, B-9100 Sint-Niklaas (BE)
(72) Inventor: Poppe, Willy Philomena Florimond., B-9100 Sint-Niklaas (BE)
(74) Representative: Donné, Eddy

(56) References cited:
- WO-A-92/16128
- BE-A- 859 468
- US-A- 2 925 856
- US-A- 5 040 255

## Description

The invention relates to an elastic springy element comprising a tubular body of foam which is provided with holes directed inwards from the outside.

Such an elastic springy element is known from Belgian patent No. 859.468. Such springy elements can advantageously be applied as a replacement of steel springs as building elements for seats, matresses, cushions and the like.

The foam can be synthetic foam, such as for instance polyurethane foam, as well as natural foam, such as natural latex.

Not only do these springy foam elements offer excellent springy properties and optimal comfort, but they can also be easily glued to layers for forming a springy supporting element such as a matress. Steel springs, to the contrary, have to be attached to each other, for instance stitched together, to form a stable supporting element. For this reason, steel springs are often packed individually in textile bags which are glued to each other or sewn together with their feet or heads. However, these bags hinder the air circulation in the supporting element.

However, in a fatigue test, the known foam springs, usually of polyurethane foam, lose a part of their initial hardness, namely about 20%, unless high density foam is used, which is very expensive, though.

The invention aims at remedying this disadvantage and to provide an elastic springy element which even better characteristics than the known foam spring.

This aim is realized according to the invention by the fact that the elastic springy element comprises a wire spring which is surrounded by the body.

A wire spring here refers to a spring from the group formed by a spiral spring, a cylindrical spring, a so-called Bonnell spring or a so-called offset spring or the like.

It has been noticed that by combining a foam body and a wire spring located therein, an unexpected synergic effect is developed, and considerably better characteristics are obtained than by a foam body alone or a wire spring alone.

In a preferred embodiment of the invention the wire spring is a steel wire spring.

However, in an other embodiment the wire spring can be made of synthetic material.

In a particular embodiment of the invention, the inside of the tubular foam body is round and also the wire spring is round with a largest diameter which corresponds with the inner diameter of the body.

In a remarkable embodiment of the invention, the length of the wire spring in position of rest is equal to the length of the tubular body in position of rest.

In an other remarkable embodiment of the invention, the length of the wire spring in position of rest is larger than the length of the tubular body in position of rest, but the length of the wire spring is reduced to the length of the tubular body by the fact that a pre-tension is applied to the wire spring, for instance by means of a loop-shaped wrapper in any material, for instance textile.

Such wrapper can of course be replaced by any other material, for instance a complete envelope in a suitable material, such as textile.

In this way, all initial hardness loss of the wire spring is intercepted, which is beneficial to the elasticity of the springy element.

Moreover, such design prevents the possibility of migration of the wire spring outside the foam spring, due to the twisting movement which can occur during the burdening of the spring.

The invention also relates to a springy supporting element provided with elastic springy elements according to one of the preceding embodiments.

Therefore, the invention also relates to a springy supporting element, -which comprises two layers of springy material between which elastic springy elements are located, characterized in that these springy elements are provided with a tubular foam body which is provided with holes directed inwards from the outside, and comprise a wire spring inside this body, whereby the bodies of these springy elements are glued to the layers of springy material.

In order to better show the characteristics of the invention, a preferred embodiment of an elastic springy element and of a springy supporting element according to the invention is described hereafter, as examples without any limitative character, reference being made to the accompanying drawings, where:
figure 1 is a perspective and partially cut-away view of an elastic springy element according to the invention;
figure 2 is a schematic representation of a cross-section of a springy supporting element provided with springy elements according to figure 1.

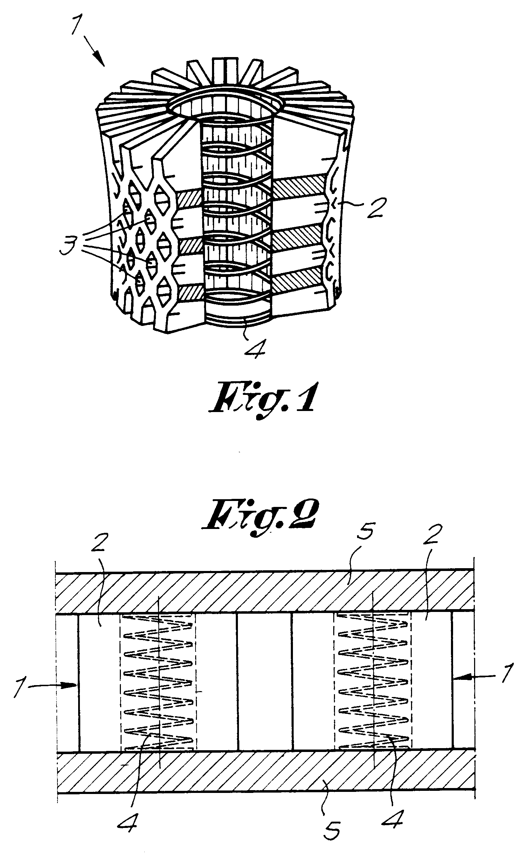

Figure 1 represents an elastic springy element 1 which consists of a round tubular body 2 of springy foam which is provided in its wall with a series of almost lozenge-shaped holes 3 which are arranged according to a suitable pattern, and of a wire spring 4 which is located in the central cavity of the body.

The springy foam can be synthetic foam, such as for instance polyurethane foam, or can be natural foam, such as for instance natural latex.

The lozenge-shaped holes 3 extend from the outside inwards and the area of their cross-section decreases from a maximal value at the outside of the body 2 to almost zero at the inside. These holes 3 can, as represented in figure 1, be spread over the entire surface of the wall of the tubular body 2. However, they can also only be spread over part of this surface. The size of the holes 3 and the thickness of the wall of the body 2 and the diameter of the body 2 are chosen in function of the desired springy properties, taking into account the characteristics of the wire spring 4.

The wire spring 4 is preferably made of steel but it can also be manufactured from synthetic material, for instance so-called composite materials. This wire spring is for instance round with a largest diameter which corresponds with the inner diameter of the body 2 so that this wire spring 4 fits closely to the inside of the body 2. However, the wire spring 4 can also be oblong, rectangular or square. The length of the wire spring 4 is preferably equal to the length of the body 2, whereby the wire spring 4 is pre-tensioned or not.

Depending on the application, the wire spring 4 can have different diameters or cross-sections, wire thicknesses or number of coils. The wire spring 4 can be a classic spiral spring as well as of a different type such as a cylindrical spring, a so-called offset spring or a so-called Bonnell spring. In a particular embodiment, the wire spring 4 can be packed in a textile bag of wrapper which can be attached to the body 2, for instance glued thereto.

By combining a foam body 2 and a wire spring 4, particularly good properties are obtained.

As opposed to an elastic springy material consisting only of foam, the advantage is obtained that, with normal and therefore relatively cheap foam for the body 2, no hardness loss occurs with a fatigue test.

As opposed to classic steel springs, the spring characteristics are improved by the combination. The impression resistance of a classic steel spring has a rather steep path, which means that the resistance of the spring with a given impression force increases rather rapidly. The combined springy element 1 according to figure 1 allows that, for an equal resistance, a larger wire spring with more coils is used, as the body 2 also intercepts part of the resistance, so that, upon impression, a much more equal path of the built-up resistance is obtained. This also causes a better slowing down or damping of the "after-springing", which is typical for a steel spring. It is a known phenomenon that a classic wire spring of steel has a tendency to move a large number of times up and down when suddenly impressed, which is very annoying when using the spring in a matress. With the combined Springy element 1 according to figure 1, this phenomenon is intercepted for 70 to 80% by the foam body 2 which, due to its cellular structure, can almost totally intercept the released energy.

The combined springy element 1 offers additional advantages when it is used in a springy supporting element as represented in figure 2, consisting of two layers 5, of a springy material such as natural or synthetic foam, which are connected to each other by means of springy elements 1. Such supporting elements can form the inside of a matress, a cushion, the seat or the back of a piece of sitting or lying furniture etc.

The wire springs 4 need no longer be interconnected to form a stable core as this is the case with classic steel springs. Indeed, the foam body 2 with the combined springy elements 1 serves as a housing for the steel spring and this body 2 has been glued without problems to the layers 5.

By this glueing by means of the springy bodies 2 the point elasticity is not lost, as this would be the case with the use of steel wire springs without bodies 2, which are packed in textile bags which are connected to each other. With the loss of point elasticity, when one single spring is impressed, the neighbouring springs tend to be deformed also.

In such a springy supporting element, the combined springy elements 1 have almost no resistance to the air circulation which should preferably occur in the supporting element in order to obtain a good micro-climate in the supporting element and a good moisture discharge.

The present invention is in no way limited to the embodiments described herebefore and represented in the figures, but such elastic springy element and springy supporting element can be realized in different variants without leaving the scope of the invention.

More specifically, the holes in the foam body need not have a lozenge-shaped cross-section.

## Claims

1. Elastic springy element which comprises a tubular foam body (2) which is provided with holes (3) extending inwards from the outside, characterized in that it comprises a wire spring (4) which is surrounded by the body (2).

2. Elastic springy element according to the preceding claim, characterized in that the wire spring (4) is a spring from the group formed by a spiral spring, a cylindrical spring, a so-called Bonnell spring or a so-called offset spring or the like.

3. Elastic springy element according to any one of the preceding claims, characterized in that the wire spring (4) is a steel wire spring.

4. Elastic springy element according to any one of claims 1 and 2, characterized in that the wire spring (4) is made of synthetic material.

5. Elastic springy element according to any one of the preceding claims, characterized in that the inside of the tubular foam body (2) is round and in that also the wire spring (4) is round with a largest diameter which corresponds to the inner diameter of the body (2).

6. Elastic springy element according to any one of the preceding claims, characterized in that the length of the wire spring (4) in a position of rest is equal to the length of the tubular body (2) in a position of rest.

7. Elastic springy element according to any one of claims 1 to 5, characterized in that the length of the wire spring (4) in a position of rest is larger than the length of the tubular body (2) in a position of rest.

8. Elastic springy element according to claim 7, characterized in that the wire spring (4) is given a pre-tension, which reduces the length thereof to the length of the tubular body (2) in a position of rest.

9. Elastic springy element according to any one of the preceding claims, characterized in that the holes (3) in the body (2) have a diameter which decreases from a maximal value at the outside of the body to almost zero at the inside.

10. Springy supporting element which comprises two layers (5) of springy material between which elastic springy elements (1) are located, characterized in that these springy elements (1) comprise a tubular foam body (2) which is provided with holes (3) extending inwards from the outside, and comprise a wire spring (4) inside this body (2), whereby the bodies(2) of these springy elements (1) are glued to the layers (5) of springy material.

## Patentansprüche

1. Elastisches Federelement, das einen röhrenförmigen Schaumstoffkörper (2) umfaßt, der mit von außen nach innen gerichteten Öffnungen (3) versehen ist, dadurch gekennzeichnet, daß es eine Drahtfeder (4) umfaßt, die von dem Körper (2) umgeben ist.

2. Elastisches Federelement gemäß dem vorangehenden Anspruch, dadurch gekennzeichnet, daß die Drahtfeder (4) eine Feder ist aus der Gruppe, gebildet aus einer Spiralfeder, einer zylindrischen Feder, einer sogenannten Bonnellfeder oder einer sogenannten Offset-Feder oder dergleichen.

3. Elastisches Federelement gemäß einem der vorangehenden Ansprüche, dadurch gekennzeichnet, daß die Drahtfeder (4) eine Stahldrahtfeder ist.

4. Elastisches Federelement gemäß einem der Ansprüche 1 und 2, dadurch gekennzeichnet, daß die Drahtfeder (4) aus synthetischem Material gefertigt ist.

5. Elastisches Federelement gemäß einem der vorangehenden Ansprüche, dadurch gekennzeichnet, daß die Innenseite des röhrenförmigen Schaumstoffkörpers (2) rund ist und dadurch, daß auch die Drahtfeder (4) rund ist, mit einem größten Durchmesser, der dem Innendurchmesser des Körpers (2) entspricht.

6. Elastisches Federelement gemäß einem der vorangehenden Ansprüche, dadurch gekennzeichnet, daß die Länge der Drahtfeder (4) in Ruheposition gleich der Länge des röhrenförmigen Körpers (2) in Ruheposition ist.

7. Elastisches Federelement gemäß einem der Ansprüche 1 bis 5, dadurch gekennzeichnet, daß die Länge der Drahtfeder (4) in Ruheposition größer ist als die Länge des röhrenförmigen Körpers (2) in Ruheposition.

8. Elastisches Federelement gemäß Anspruch 7, dadurch gekennzeichnet, daß die Drahtfeder (4) eine Vorspannung erhält, welche die Länge hiervon auf die Länge des röhrenförmigen Körpers (2) in Ruheposition reduziert.

9. Elastisches Federelement gemäß einem der vorangehenden Ansprüche, dadurch gekennzeichnet, daß die Öffnungen (3) im Körper (2) einen Durchmesser haben, der sich von einem Maximalwert an der Außenseite des Körpers auf nahezu Null an der Innenseite verringert.

10. Elastisches Stützelement, das zwei Lagen (5) von federndem Material umfaßt, zwischen denen elastische Federelemente (1) angeordnet sind, dadurch gekennzeichnet, daß diese Federelemente (1) einen röhrenförmigen Schaumstoffkörper (2) umfassen, der mit Öffnungen (3) versehen ist, die sich von außen nach innen erstrecken, und eine Drahtfeder (4) innerhalb dieses Körpers (2) umfassen, wobei die Körper (2) dieser Federelemente (1) an die Lagen (5) aus federndem Material geklebt sind.

## Revendications

1. Elément résilient élastique qui comprend un corps tubulaire en mousse (2) qui est muni de trous (3) s'étendant de l'extérieur vers l'intérieur, caractérisé en ce qu'il comprend un ressort (4) en fil métallique qui est entouré par le corps (2).

2. Elément résilient élastique selon la revendication précédente, caractérisé en ce que le ressort (4) en fil métallique est un ressort appartenant au groupe formé par un ressort en spirale, un ressort cylindrique, ce que l'on appelle un ressort Bonnell ou ce que l'on appelle un ressort désaxé ou analogues.

3. Elément résilient élastique selon l'une quelconque des revendications précédentes, caractérisé en ce que le ressort (4) en fil métallique est un ressort en fil métallique d'acier.

4. Elément résilient élastique selon l'une quelconque des revendications 1 et 2, caractérisé en ce que le ressort (4) en fil métallique est réalisé en une matière synthétique.

5. Elément résilient élastique selon l'une quelconque des revendications précédentes, caractérisé en ce que l'intérieur du corps tubulaire en mousse (2) est rond et en ce que le ressort (4) en fil métallique est également rond, le diamètre maximal du ressort correspondant au diamètre interne du corps (2).

6. Elément résilient élastique selon l'une quelconque des revendications précédentes, caractérisé en ce que la longueur du ressort (4) en fil métallique dans la position de repos est égale à la longueur du corps tubulaire (2) dans la position de repos.

7. Elément résilient élastique selon l'une quelconque des revendications 1 à 5, caractérisé en ce que la longueur du ressort (4) en fil métallique dans la position de repos est supérieure à la longueur du corps tubulaire (2) dans la position de repos.

8. Elément résilient élastique selon la revendication 7, caractérisé en ce que le ressort (4) en fil métallique est soumis à une prétension qui réduit sa longueur pour la rendre égale à celle du corps tubulaire (2) dans la position de repos.

9. Elément résilient élastique selon l'une quelconque des revendications précédentes, caractérisé en ce que les trous (3) pratiqués dans le corps (2) possèdent un diamètre qui diminue depuis une valeur maximale à l'extérieur du corps jusqu'à approximativement zéro à l'intérieur.

10. Elément de support résilient qui comprend deux couches (5) d'une matière résiliente entre lesquelles sont disposés des éléments résilients élastiques (1), caractérisé en ce que ces éléments résilients (1) comprennent un corps tubulaire en mousse (2) qui est muni de trous (3) s'étendant de l'extérieur vers l'intérieur et comprennent un ressort (4) en fil métallique à l'intérieur de ce corps (2), les corps (2) de ces éléments résilients (1) étant collés aux couches (5) de la matière résiliente.
